# EUROPÄISCHE PATENTANMELDUNG

(11) **EP 1 419 843 A2**
(43) Veröffentlichungstag der Anmeldung: **19.05.2004**
(21) Anmeldenummer: 03017151.6
(22) Anmeldetag: 29.07.2003
(51) Int. Cl.: B23K 9/02, B23K 9/025, B23K 31/00

(54) **Verfahren zum Verschweissen der Bandenden eines Metallbandes**

(30) Priorität: 16.11.2002 DE 10253453
(71) Anmelder: Kemmerich, Josef, 57439 Attendorn (DE)
(72) Erfinder: Kemmerich, Josef, 57439 Attendorn (DE)
(74) Vertreter: Köchling, Conrad-Joachim, Dipl.-Ing.

(57) **Zusammenfassung**

Um ein Verfahren zum Verschweißen der Bandenden eines Metallbandes (1,1') mittels einer in eine Bandförderanlage zwischen einer Bandhaspel und einem Bandverarbeitungswerkzeug (2) integrierten Schweißvorrichtung (7), wobei das Metallband (1) von der Bandhaspel abgezogen und in das Bandverarbeitungswerkzeug (2) transportiert wird und wobei an das Bandende vor Erreichen des Bandverarbeitungswerkzeuges (2) das Ende eines weiteren Metallbandes (1') angeschweißt wird, zu schaffen, mit dem schnell und präzise das Anschließen von Bandenden ermöglicht ist und bei dem Beschädigungen insbesondere des Werkzeuges im Bereich der Verbindungsschweißnaht zwischen den Bandenden vermieden werden, wird vorgeschlagen, dass die Schweißnaht zwischen den Bandenden in dem Bereich angeordnet wird, der nach dem Durchlauf durch das Bandverarbeitungswerkzeug (2) als Stanzschrott weggestanzt wird.

## Beschreibung

Die Erfindung betrifft ein Verfahren zum Verschweißen der Bandenden eines Metallbandes mittels einer in eine Bandförderanlage zwischen einer Bandhaspel und einem Bandverarbeitungswerkzeug integrierten Schweißvorrichtung, wobei das Metallband von der Bandhaspel abgezogen und in das Bandverarbeitungswerkzeug transportiert wird und wobei an das Bandende vor Erreichen des Bandverarbeitungswerkzeuges das Ende eines weiteren Metallbandes angeschweißt wird.

Bei der Verarbeitung von Metallband werden als Verarbeitungswerkzeuge häufig Stanzwerkzeuge eingesetzt. Normalerweise muss bei Erreichen des Bandendes der Reststreifen aus dem Werkzeug und dem Vorschub entfernt werden. Danach wird ein neues Band über die Bandzuführanlage in den Vorschub eingeführt. Der nächste Arbeitsgang ist das Anstanzen des neuen Streifens, der dabei jeweils über die Vorschublänge vorgeschoben wird, bis er das Werkzeugende erreicht hat und das fertige Teil abgetrennt wird. Anschließend kann die Produktion im Dauerlauf gestartet werden. Es werden auch Halbfertigteile abgestanzt, die dann mit Hilfe eines Transfergerätes im Vorschubschritt des Stufenabstandes weitertransportiert werden. Dieser Vorgang beim Bandwechsel dauert in der Regel, insbesondere bei relativ langen Bearbeitungswerkzeugen, circa 15 bis 20 Minuten. Dabei besteht zudem die Gefahr, dass beim Anstanzen eines neuen Bandes ein Werkzeugbruch entsteht.

Um diese Zeit zu verkürzen und die Gefahr des Werkzeugbruchs zu minimieren ist man bei vielen bandverarbeitenden Prozessen bereits dazu übergegangen, die Bandenden aneinander zu schweißen. Dies bringt allerdings die Gefahr mit sich, dass das Material sich im Bereich der Schweißnaht aufhärtet und die Bauteile und/oder deren Beschichtungen im Werkzeug zerstört werden.

Ausgehend von diesem Stand der Technik liegt der Erfindung die Aufgabe zugrunde, ein Verfahren gattungsgemäßer Art zu schaffen, mit dem schnell und präzise das Anschließen von Bandenden ermöglicht ist und bei dem Beschädigungen insbesondere des Werkzeuges im Bereich der Verbindungsschweißnaht zwischen den Bandenden vermieden werden.

Zur Lösung dieser Aufgabe schlägt die Erfindung vor, dass die Schweißnaht zwischen den Bandenden in dem Bereich angeordnet wird, der nach dem Durchlauf durch das Bandverarbeitungswerkzeug als Stanzschrott weggestanzt wird.

Dadurch, dass die Verbindungsschweißnaht zwischen den Bandenden in einem Bereich angeordnet wird, der als Stanzschrott weggestanzt wird, also nicht vom Bandverarbeitungswerkzeug verformt oder gestanzt wird und nicht Gegenstand des halbfertigen oder fertigen Stanz- oder Biegeproduktes ist, ist es einerseits möglich, die Bandenden in bekannter Weise miteinander zu verschweißen, wobei andererseits Beschädigungen des Werkzeuges oder dergleichen vermieden sind, da die Schweißnaht in dem Bereich angeordnet ist, der vom Bandverarbeitungswerkzeug nicht bearbeitet wird.

Um die entsprechende Positionierung der Schweißnaht in einfacher Weise zu realisieren, ist vorgesehen, dass das Bandende des ablaufenden Bandes in einem Abstand vor dem Bandverarbeitungswerkzeug positioniert wird, der der einfachen oder einem ganzzahligen Vielfachen der Vorschublänge der ersten Werkzeugoperation bei einem Folge- oder Stufenwerkzeug entspricht, in dieser Position das Bandende des zulaufenden Bandes auf Stoß an das Bandende des ablaufenden Bandes herangeführt wird und in dieser Position die Bandenden miteinander verschweißt werden.

Hierdurch ist sichergestellt, dass die Schweißnaht in dem Bereich angeordnet ist, der später nach Durchlauf durch das Bearbeitungswerkzeug als Stanzschrott weggestanzt wird.

Bei dem üblicherweise zur Verfügung stehenden Bandmaterial ist es bekannt, dass die Bandenden durch Verformung oder durch sonstige Maßnahmen zum Verschweißen oder zum Bearbeiten innerhalb des Bandverarbeitungswerkzeuges nicht geeignet sind, so dass die Bandenden vor der Erzeugung der Schweißnaht abgetrennt werden sollen.

Hierzu ist erfindungsgemäß vorgesehen, dass das Bandende des ablaufenden Bandes abgeschnitten und entfernt wird, und das so erzeugte Ende des Bandes in einem Abstand vor dem Bandverarbeitungswerkzeug positioniert wird, der der einfachen oder einem ganzzahligen Vielfachen der Vorschublänge der ersten Werkzeugoperation bei einem Folge- oder Stufenwerkzeug entspricht, das Bandende des zulaufenden Bandes abgeschnitten und entfernt und das so erzeugte Ende des Bandes auf Stoß an das positionierte Ende des ablaufenden Bandes herangeführt wird und in dieser Position die Enden der Bänder miteinander verschweißt werden.

Eine bevorzugte Weiterbildung hierzu wird darin gesehen, dass eine Schneidvorrichtung zum Abtrennen des Bandendes des ablaufenden Bandes in einem Abstand vor dem Bandverarbeitungswerkzeug positioniert wird, der einem Einfachen oder einem ganzzahligen Vielfachen der Vorschublänge der ersten Werkzeugoperation bei einem Folge- oder Stufenwerkzeug entspricht, das Bandende des ablaufenden Bandes vor Erreichen der Position der Schneidvorrichtung erfasst und positioniert wird, mittels der Schneidvorrichtung das Bandende abgetrennt, entfernt und das so erzeugte Ende des Bandes in der Schneidposition gehalten wird, das Bandende des zulaufenden Bandes vor Erreichen der Position des Endes des ablaufenden Bandes positioniert und die Schneidvorrichtung in eine Position entgegen Zuführrichtung des zuführenden Bandes jenseits des Bandendes des zulaufenden Bandes verstellt wird, anschließend das Bandende des zulaufenden Bandes mittels der Schneidvorrichtung abgetrennt, entfernt und das so erzeugte Ende des zulaufenden Bandes auf Stoß an das positionierte Ende des ablaufenden Bandes herangeführt wird und in dieser Position die Enden der Bänder miteinander verschweißt werden.

Eine Vorrichtung zur Durchführung des Verfahrens ist im Anspruch 5 angegeben.

Mit dem erfindungsgemäßen Verfahren, bzw. mit der dazu vorgesehenen Vorrichtung ist es möglich, durch entsprechende Schweiß- und Positionsparameter die Schweißnaht exakt in den Bereich des Bandes zu legen, der später als Schrott weggestanzt wird. Der Schnitt der Trennvorrichtung für das Abtrennen des Bandendes wird in einem definierten Abstand vom Werkzeug angesetzt, der ein Vielfaches der Vorschublänge gemessen von der ersten Werkzeugoperation (Folge oder Stufe) beträgt. Dazu wird die entsprechende Bandschneidvorrichtung in Abhängigkeit der für das bestimmte Werkzeug individuell abgespeicherten Werte mittels einer Steuervorrichtung in eine entsprechende Position verfahren. Dies ist die Grundstellung für die entsprechende Vorrichtung in Verbindung mit dem auf der entsprechenden Presse befindlichen Werkzeug. Die Schneidvorrichtung und die eigentliche Schweißstation sind auf einem gemeinsamen Schlitten in einem bestimmten Abstand fest montiert. Das Bandende des ablaufenden Bandes wird durch einen Sensor überwacht. Sobald das Bandende erreicht ist, was durch den Sensor erfasst wird, schaltet die Anlage ab. Anschließend wird das Bandende mittels der Schneidvorrichtung abgetrennt. Über einen konstanten Hub eines Pneumatikzylinders, der dem Abstand von Schneidvorrichtung und Schweißstation entspricht, wird dann der gesamte Schlitten verfahren, so dass sich das im Vorschub der Verarbeitungsmaschine fixierte Bandende nunmehr in der Mitte der Schweißstation befindet. Mittels einer Klemmbacke, insbesondere aus Kupfer, wird das Bandende in dieser Position fixiert. Der Bandanfang des neuen Coils wird vom Haspel durch eine Richtmaschine in die Bandendenschweißanlage geführt, wobei der Bandanfang bis in den Schnittbereich der Schneidvorrichtung geführt und abgeschnitten wird. Danach wird der so erzeugte neue Bandanfang in Schleichgeschwindigkeit ebenfalls in die Schweißstation auf Stoß mit dem dort schon gehaltenen Bandende des abgelaufenen Bandes vorgeschoben und mit einer Backe, insbesondere aus Kupfer, geklemmt. Anschließend wird der Schweißvorgang gestartet. Der entsprechende Schweißbrenner kann auf einem Verfahrschlitten angebracht sein, der aus seiner Grundstellung definiert auf den Startpunkt für die erste Schweißnaht gefahren wird und mit dem Schweißprozess beginnt. Es können über die gesamte Bandbreite gesehen mehrere Schweißzonen programmiert werden, so dass keine Schweißnaht im Bereich von irgendwelchen Aktivteilen des Werkzeuges liegt (bei Durchlauf des Bandes durch das Werkzeug). Außerdem ist eine vollständige Verbindung der Bandenden über die gesamte Bandbreite nicht erforderlich.

Die Schweißung kann mit üblichen Schweißverfahren erfolgen, wobei das Wig-Schweißen ohne Zusatzwerkstoff bevorzugt ist, da hierbei kein Aufbau der Schweißnaht entsteht.

Nach erfolgter Schweißung fährt der Schweißbrenner in die Parkposition zurück und die Klemmbacken werden geöffnet. Die gesamte Hilfsvorrichtung fährt dann in die Grundstellung und die Bandverarbeitungsmaschine kann im Dauerlauf betrieben werden. Das Verschweißen und Abtrennen der Bandenden läuft vorzugsweise automatisch ab, kann aber auch manuell in entsprechender Weise verfahrensmäßig betreiben werden.

In der Zeichnung ist schematisch der Verfahrensablauf dargestellt und nachstehend näher beschrieben.

Es zeigt:

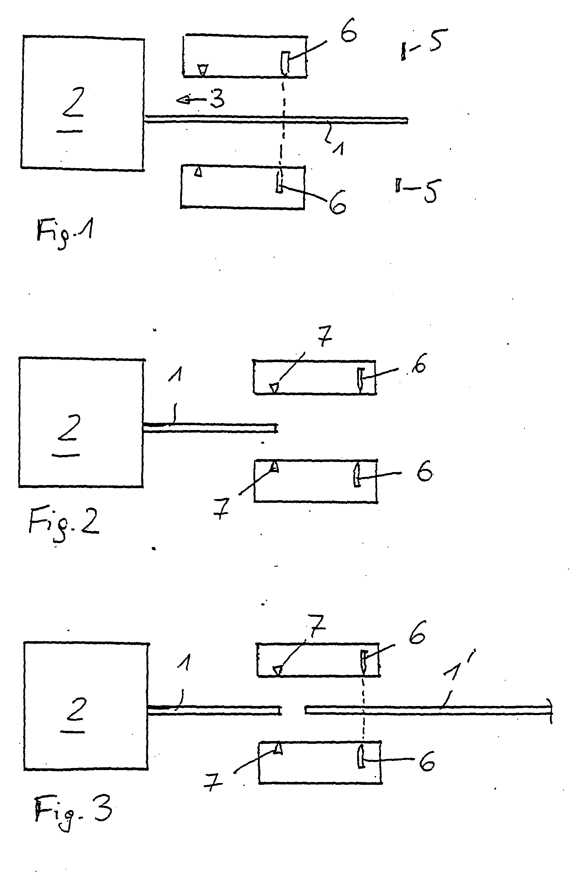

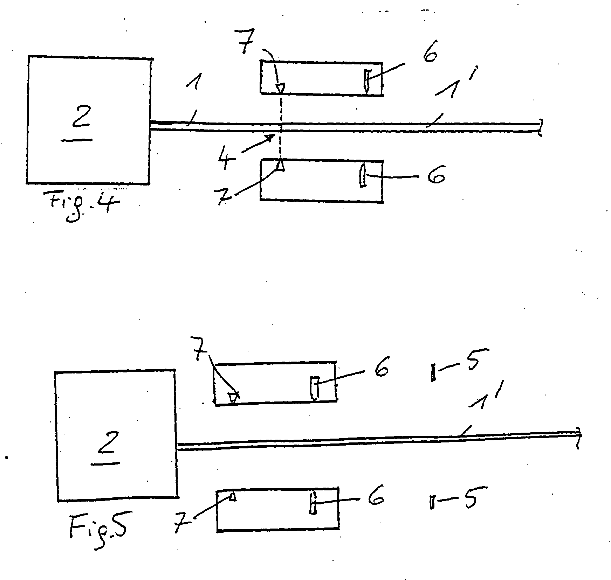

Figur 1 bis Figur 5 die unterschiedlichen Verfahrensschritte beim Abtrennen und Verschweißen der Bandenden.

In der Zeichnung ist ein Verfahren zum Verschweißen der Bandenden eines Metallbandes 1, 1' gezeigt. Dazu ist eine Vorrichtung vorgesehen, die zwischen eine Bandförderanlage mit einer Bandhaspel (in der Zeichnung nicht gezeigt) und einem Bandverarbeitungswerkzeug 2 die in die Gesamtanlage integriert ist. Das Metallband 1,1' wird von einer Bandhaspel abgezogen und in Richtung des Bewegungspfeiles 3 in das Bandverarbeitungswerkzeug 2 transportiert, wobei an das Bandende des Bandes 1 vor Erreichen des Bandverarbeitungswerkzeuges 2 das Ende eines weiteren Metallbandes 1' angeschweißt wird. Die Schweißnaht 4 zwischen den Bandenden der Bänder 1, 1' ist erfindungsgemäß in einem Bereich angeordnet, der nach dem Durchlauf durch das Bandverarbeitungswerkzeug 2 als Stanzschrott weggestanzt wird. Dazu wird das Bandende des ablaufenden Bandes 1 mittels Sensoren 5 erfasst und bei Bandende der Bandvorschub abgeschaltet. Anschließend wird, wie in Figur 1 dargestellt, das Bandende des ablaufenden Bandes 1 abgeschnitten mittel einer Schneidvorrichtung 6, wobei die gesamte Schneid- und Schweißvorrichtung derart mittels Linearführungen positioniert wird, dass der erzeugte Endbereich im Bereich des späteren Schrotts liegt. Das so erzeugte Ende des Bandes wird gemäß Darstellung in Figur 2 in einem Abstand vor dem Bandverarbeitungswerkzeug 2 positioniert, der der einfachen oder einem ganzzahligen Vielfachen der Vorschublänge der ersten Werkzeugoperation bei einem Folge- oder Stufenwerkzeug entspricht.

Das Bandende kann in dieser Position mittels Klemmbacken positioniert gehalten werden. Nachfolgend wird das Ende des zulaufenden Bandes 1' zugeführt und mittels der Schneidvorrichtung 6 abgetrennt, wie in Figur 3 verdeutlicht. Das so erzeugte neue Ende des zulaufenden Bandes 1' wird auf Stoß an das schon positionierte Ende des ablaufenden Bandes 1 herangeführt und in dieser Position geklemmt gehalten und es werden in dieser Position die Enden der Bänder 1, 1' miteinander durch die Schweißvorrichtung 7 verschweißt. Anschließend werden die entsprechenden Klemmbacken geöffnet und der Vorrichtungsbestandteil mit Schneivorrichtung 6 und Schweißvorrichtung 7 wird in die Grundposition gemäß 5 überführt, wobei das angeschlossene weitere Band 1' in die Verarbeitungswerkzeuge 2 einlaufen kann. Um die Operation zu vereinfachen, sind die Aggregate 6 und 7 an einem gemeinsamen parallel zur Richtung 3 verschieblichen Schlitten gehaltert, der in Richtung 3 und entgegengesetzt dazu verfahrbar ist. Bei einer vorzugsweise vorgesehenen automatischen Betriebsweise sind die Bestandteile der Vorrichtung miteinander durch eine Steuereinrichtung verknüpft, so dass die gewünschten Arbeitsvorgänge und Bewegungsabläufe vollautomatisch gesteuert ablaufen können.

Die Erfindung ist nicht auf das Ausführungsbeispiel beschränkt, sondern im Rahmen der Offenbarung vielfach variabel.

Insbesondere kann der Schlitten, der die Vorrichtungsbestandteile 6 und 7 aufweist, in eine Bandanlage zwischen einen Übergabetisch und einem Walzenvorschub zweifach verfahrbar über Linearführung mit Pneumatikzylinder und Schrittmotor sowie Bandseitenführung ausgestattet sein. Die Bandschneidvorrichtung kann beispielsweise eine hydraulische Trennschere sein. Der Schlitten kann beispielsweise ein Linearfahrwerk mit Kugelgewindetrieb und Schrittmotor sein. Als Schweißvorrichtung 7 kann beispielsweise ein Wig-Inverter-Schweißgerät für Impulsschweißung vorgesehen sein. Des Weiteren kann eine automatische Schweißbrenneranhebung mit zusätzlichem Koordinatenschlitten für die Zustellung des Brenners bei unterschiedlichen Blechdicken vorgesehen sein. Auch kann eine hydraulisch Spannvorrichtung zum Spannen der Bandenden ausgebildet sein. Die Steuerung kann in Form einer elektronischen SPS-Steuerung realisiert sein.

## Patentansprüche

1. Verfahren zum Verschweißen der Bandenden eines Metallbandes (1,1') mittels einer in eine Bandförderanlage zwischen einer Bandhaspel und einem Bandverarbeitungswerkzeug (2) integrierten Schweißvorrichtung (7), wobei das Metallband (1) von der Bandhaspel abgezogen und in das Bandverarbeitungswerkzeug (2) transportiert wird und wobei an das Bandende vor Erreichen des Bandverarbeitungswerkzeuges (2) das Ende eines weiteren Metallbandes (1') angeschweißt wird, **dadurch gekennzeichnet, dass** die Schweißnaht zwischen den Bandenden in dem Bereich angeordnet wird, der nach dem Durchlauf durch das Bandverarbeitungswerkzeug (2) als Stanzschrott weggestanzt wird, oder in einen Bereich des später zu erzeugenden Teils gelegt, in dem eine Schweißnaht nicht stört.

2. Verfahren nach Anspruch 1, **dadurch gekennzeichnet, dass** das Bandende des ablaufenden Bandes (1) in einem Abstand vor dem Bandverarbeitungswerkzeug (2) abgeschert wird, der der einfachen oder einem ganzzahligen Vielfachen der Vorschublänge der ersten Werkzeugoperation bei einem Folge- oder Stufenwerkzeug entspricht, in dieser Position das Bandende des zulaufenden Bandes (1') auf Stoß an das Bandende des ablaufenden Bandes (1) herangeführt wird und in dieser Position die Bandenden miteinander verschweißt werden.

3. Verfahren nach einem der Ansprüche 1 oder 2, **dadurch gekennzeichnet, dass** das Bandende des ablaufenden Bandes (1) abgeschnitten und entfernt wird, und das so erzeugte Ende des Bandes in einem Abstand vor dem Bandverarbeitungswerkzeug (2) positioniert ist, der der einfachen oder einem ganzzahligen Vielfachen der Vorschublänge der ersten Werkzeugoperation bei einem Folge- oder Stufenwerkzeug entspricht, das Bandende des zulaufenden Bandes (1') abgeschnitten und entfernt und das so erzeugte Ende des Bandes auf Stoß an das positionierte Ende des ablaufenden Bandes (1) herangeführt wird und in dieser Position die Enden der Bänder (1,1') miteinander verschweißt werden.

4. Verfahren nach einem der Ansprüche 1 bis 3, **dadurch gekennzeichnet, dass** eine Schneidvorrichtung (6) zum Abtrennen des Bandendes des ablaufenden Bandes (1) in einem Abstand vor dem Bandverarbeitungswerkzeug (2) positioniert wird, der einem Einfachen oder einem ganzzahligen Vielfachen der Vorschublänge der ersten Werkzeugoperation bei einem Folgeoder Stufenwerkzeug entspricht, das Bandende des ablaufenden Bandes (1) vor Erreichen der Position der Schneidvorrichtung (6) erfasst und positioniert wird, mittels der Schneidvorrichtung (6) das Bandende abgetrennt, entfernt und das so erzeugte Ende des Bandes (1) in der Schneidposition gehalten wird, das Bandende des zulaufenden Bandes (1') vor Erreichen der Position des Endes des ablaufenden Bandes (1) positioniert und die Schneidvorrichtung (6) in eine Position entgegen Zuführrichtung des zuführenden Bandes (1') jenseits des Bandendes des zulaufenden Bandes (1') verstellt wird, anschließend das Bandende des zulaufenden Bandes (1') mittels der Schneidvorrichtung (6) abgetrennt, entfernt und das so erzeugte. Ende des zulaufenden Bandes (1') auf Stoß an das positionierte Ende des ablaufenden Bandes (1) herangeführt wird und in dieser Position die Enden der Bänder (1,1') miteinander verschweißt werden.

5. Vorrichtung zur Durchführung des Verfahrens nach einem der Ansprüche 1 bis 4, bestehend aus einer in eine Bandförderanlage zwischen einer Bandhaspel und einem Bandverarbeitungswerkzeug (2) mit Bandeinzug integrierten Schweißvorrichtung (7), **dadurch gekennzeichnet, dass** die Schweißvorrichtung auf einem parallel zur Bandförderrichtung verstellbaren Schlitten angeordnet ist, auf dem Schlitten in fixem gegebenenfalls einstellbarem Abstand von der Schweißvorrichtung (7) und in Ablaufrichtung des Bandes (1) vor der Schweißvorrichtung (7) eine Vorrichtung (6) zum Abtrennen des Endes des Bandes (1) angeordnet ist, dass in Bandablaufrichtung (3) vor dem Schlitten eine Vorrichtung (5) zur Erfassung des Bandendes gestellfest gehalten ist, und dass eine Steuereinrichtung vorgesehen ist, die von der Vorrichtung zur Erfassung des Bandendes (5) angesteuert ist und mittels derer der Schlitten verfahrbar, die Vorrichtung (6) zum Abtrennen des Bandendes, und die Schweißvorrichtung (7) betätigbar ist.
